# EUROPÄISCHE PATENTSCHRIFT

(11) **EP 0 664 302 B1**
(45) Veröffentlichungstag und Bekanntmachung des Hinweises auf die Patenterteilung: **16.09.1998**
(21) Anmeldenummer: 95100419.1
(22) Anmeldetag: 13.01.1995
(51) Int. Cl.: C08F 2/10, C02F 1/54, D21H 17/34

(54) **Ein- oder mehrstufiges Verfahren zur Herstellung niedrigviskoser, wasserlöslicher Polymerdispersionen**
Process for preparing polymer dispersions with low viscosit in one or more steps
Procédé pour la préparation de dispersions de polymères à basse viscosité en un ou plusieurs stades

(30) Priorität: 24.01.1994 DE 4401951
(43) Veröffentlichungstag der Anmeldung: 26.07.1995
(73) Patentinhaber: Stockhausen GmbH & Co. KG, 47705 Krefeld (DE)
(72) Erfinder: Braum, Manfred, D-55122 Mainz (DE); Desch, Wolfram, D-64331 Weiterstadt (DE); Carl, Joachim, Dr., D-64291 Darmstadt (DE); Quis, Peter, Dr., D-64298 Darmstadt (DE); Schmitt, Günter, Dr., D-64291 Darmstadt (DE)

(56) Entgegenhaltungen:
- EP-A- 0 183 466
- DE-A- 4 216 167

## Beschreibung

### Gebiet der Erfindung

Die Erfindung betrifft ein ein- oder mehrstufiges Verfahren zur Herstellung niedrigviskoser, wasserlöslicher Polymerdispersionen enthaltend mindestens ein polymeres Dispergiermittel D) und ein Polymerisat A) bestehend aus a1) mindestens einem wasserlöslichen Monomeren und gegebenenfalls a2) mindestens einem amphiphilen Monomeren.

### Stand der Technik

Wäßrige Dispersionen wasserlöslicher Polymerisate werden beispielsweise als Flockungsmittel bei der Abwasserbehandlung, als Entwässerungsmittel nach Abtrennung der wäßrigen Phase, als Retentionsmittel bei der Papierherstellung, als Bodenverbesserungsmittel oder als Dispergiermittel eingesetzt.
EP 179 394 beschreibt eine mit Wasser mischbare Flüssigkeit, bestehend aus Partikeln, aufgebaut aus einem hochmolekularen Polymergel, das Teilchengrößen von über 20 µm aufweist, in wäßriger Lösung als kontinuierlicher Phase, die ein Äquilibrierungsmittel enthält, das den Wassergehalt der Gelpartikel mit dem Wasseranteil in der kontinuierlichen Phase im Gleichgewicht hält und das somit eine Agglomeration der Gelpartikel verhindert. Als bevorzugte Äquilibrierungsmittel werden das Natriumsalz der Polyacrylsäure bzw. Polydiallyldimethylammoniumchlorid (Poly-DADMAC) verwendet.
In EP 183 466 wird ein Verfahren zur Herstellung einer wasserlöslichen Polymerdispersion beschrieben, gekennzeichnet durch das Polymerisieren eines wasserlöslichen Monomeren unter Rühren in einer wäßrigen Lösung von wenigstens einem Salz in Gegenwart eines Dispergiermittels. Hierbei finden Polyole, Polyalkylenether, Alkalisalze der Polyacrylsäure sowie Alkalisalze der Poly-2-Acrylamido-2-methylpropansulfonsäure als Dispergiermittel Verwendung.
EP-PS 29 44 663 umfaßt ein Verfahren zur Herstellung einer wäßrigen Dispersion aus einem wasserlöslichen Polymerisat mit guter Stabilität und Fließfähigkeit, wobei das wasserlösliche Polymerisat wenigstens ein wasserlösliches ethylenisch ungesättigtes Monomeres enthält und wobei als Dispergiermittel Polyalkylenether, Polyethylenimin und andere Polymerisate anwesend sein können. Die solchermaßen hergestellte wäßrige Dispersion kann, gegebenenfalls nach Verdünnen mit Wasser, als Flockungshilfsmittel, Verdickungsmittel, Bodenkonditionierungsmittel und für weitere Anwendungen eingesetzt werden.
Die deutsche Patentanmeldung P 42 16 167.3 beschreibt wäßrige Dispersionen wasserlöslicher Polymerisate, gebildet durch Polymerisation eines Gemisches bestehend aus wasserlöslichen, hydrophoben und gegebenenfalls amphiphilen Monomeren in Gegenwart eines polymeren Dispergiermittels. Ein zweistufiges Verfahren zur Herstellung von niedrigviskosen wäßrigen Dispersionen wasserlöslicher Polymerisate gemäß der deutschen Patentanmeldung P 42 16 167.3 mit erhöhtem Gehalt an Wirksubstanz wird von der deutschen Patentanmeldung P 43 16 200.2 umfaßt. In der deutschen Patentanmeldung P 42 35 567.6 wird ein mindestens dreistufiges Verfahren zur Herstellung von niedrigviskosen wäßrigen Dispersionen wasserlöslicher Polymerisate beschrieben, womit der Gehalt an Wirksubstanz noch weiter erhöht werden kann. Bei diesem Verfahren wird in einer ersten Stufe die wäßrige Polymerdispersion gemäß der deutschen Patentanmeldung P 42 16 167.3 hergestellt, in einer zweiten Stufe durch Abziehen von Wasser der Wirkstoff der Polymerdispersion erhöht, sowie in einer dritten Stufe weitere Mengen an polymerem Dispergiermittel zugesetzt, wobei die zweite und die dritte Verfahrensstufe sukzessive im Anschluß wiederholt werden können.
In EP-A 262 945 werden homogene Mischungen aus zwei wasserlöslichen Polymerisaten beschrieben, wobei ein Polymerisat in der wäßrigen Lösung des anderen Polymerisats durch Polymerisation wasserlöslicher Monomere hergestellt wird. Das in der Lösung vorgelegte Polymerisat weist vorzugsweise ein mittleres Molekulargewicht von weniger als 10⁶ Dalton auf, das in der wäßrigen Lösung hergestellte Polymerisat ein Molekulargewicht von mindestens 2 x 10⁶ Dalton.

### Aufgabe und Lösung

Die in EP 170 394 beschriebenen, Gelpartikel enthaltenden, wäßrigen Lösungen haben zum Nachteil, daß sie nach längeren Standzeiten stark erhöhte Viskositäten aufweisen, die nur durch die Anwendung von Schergefällen, wie beispielsweise intensives Rühren, reduziert werden können.
Die rheologischen Eigenschaften hängen hierbei von einem komplexen Gleichgewicht zwischen Polymerisat, Äquilibrierungsmittel, Wassergehalt und Teilchengröße der Gelpartikel ab.
In EP 183 466 werden wasserlösliche Polymerisate als Dispersionen in wäßrigen Salzlösungen unter Zuhilfenahme eines Dispergiermittels beansprucht. Nachteilig bei diesen Dispersionen ist der hohe Salzgehalt der wäßrigen Phase (bis zu 30 Gew.-%) im Vergleich zu einem relativ geringen Polymerisat (= Wirkstoff-)gehalt (bis zu 20 Gew.-%), der bei bestimmten Anwendungen solcher Dispersionen zu Abwasserproblemen führt.
Oftmals prohibitiv für die Verwendung von wäßrigen Dispersionen gemäß DE-PS 29 24 663 wirken sich die hohen Anteile an Dispergiermittel bezogen auf das wasserlösliche Polymerisat aus. Verwendet man solche Dispersionen beispielsweise als Flockungsmittel für elektrisch geladene Teilchen, so wird die Wirkung der hochmolekularen ionischen Polymeren durch das im Vergleich hierzu niedermolekulare Dispergiermittel reduziert.
Die aus dem o.a. Stand der Technik resultierende Aufgabe, wäßrige Dispersionen wasserlöslicher Polymerisate zur Verfügung zu stellen, die eine niedrige Viskosität, einen hohen Gehalt an Polymerisat-Wirkstoff, ein hohes Polymerisat-Molekulargewicht sowie eine Salz-freie Wasserphase aufweisen, wird von den erfindungsgemäßen Polymeren in wäßriger Dispersion gemäß der deutschen Patentanmeldung P 42 16 167.3 gelöst. Darüber hinaus stellen die deutschen Patentanmeldungen P 43 16 200.2 bzw. P 43 35 567.6 zwei- bzw. mehrstufige Verfahren zur Verfügung, nach dem die in P 42 16 167.3 realisierten niedrigen Viskositäten bzw. hohen Gehalte an Polymerisat-Wirkstoff mit hohem Molekulargewicht noch weiter reduziert (Viskosität) bzw. erhöht (Wirkstoffgehalt und/oder Molekulargewicht) werden können.
In EP-A 262 945 werden homogene Mischungen zweier wasserlöslicher Polymerisate beansprucht, die durch die Bildung des einen Polymerisats in der wäßrigen Lösung des anderen Polymerisats hergestellt werden, wobei ein Polymerisat aus der Gruppe der Polykationen, vorzugsweise mit Molekulargewichten unter 10⁶ Dalton, ausgewählt ist. Die in EP-A 262 945 realisierten Wirkstoffanteile betragen zwischen maximal 30 bis 35 Gew.-% bezogen auf die wäßrigen Dispersionen.
Weiterhin bestand trotz der insbesondere in den deutschen Patentanmeldungen P 42 16 167.3, P 43 16 200.2 und P 43 35 567.6 sowie in EP-A 262 945 vorgeschlagenen Lösungen, wäßrige Dispersionen wasserlöslicher Polymerisate zur Verfügung zu stellen, die eine niedrige Viskosität neben einem hohen Gehalt an Polymerisat-Wirkstoff und einer Abwesenheit weiterer Hilfsstoffe in der Wasserphase aufweisen, die Aufgabe zur Erhöhung der Polymerisat-Wirkstoffanteile in der wäßrigen Phase, insbesondere von Polymerisat-Wirkstoffen, die hohe Anteile an wasserlöslichen Monomeren, die beispielsweise bei Verdünnung der Dispersion verdickende Wirkung entfalten, neben niedrigen Anteilen an hydrophoben Monomeren, die ihrerseits keine Wirkung entfalten, aufweisen.

Überraschenderweise wurde gefunden, daß mit einem im folgenden beschriebenen ein- oder mehrstufigen Verfahren hochkonzentrierte niedrig-viskose, wasserlösliche Polymerdispersionen PD' bzw. PD'' hergestellt werden können, die mindestens ein polymeres Dispergiermittel D) sowie ein Polymerisat A), aufgebaut aus:
a1) 80 bis 100 Gew.-%, im besonderen Fall 80 bis 99 Gew.-%, im ganz besonderen Fall 85 bis 95 Gew.-%, mindestens eines wasserlöslichen Monomeren sowie gegebenenfalls
a2) 0 bis 20 Gew.-%, im besonderen Fall 1 bis 20 Gew.-%, im ganz besonderen Fall 5 bis 15 Gew -%, mindestens eines amphiphilen Monomeren,
enthalten, wobei die Summe der Monomeren a1) und a2) 100 Gew.-% ausmacht, wobei die Polymerisate A) ein mittleres Molekulargewicht M_{w} (Gewichtsmittel) von mindestens 106 Dalton aufweisen und das polymere Dispergiermittel D) bevorzugt ein Polyelektrolyt mit einem Molekulargewicht M_{w} von weniger als 5 x 10⁵ Dalton oder ein Polyalkylenether ist, wobei D) mit A) unverträglich ist.
In der ersten Stufe wird hierbei eine wäßrige Dispersion PD) des wasserlöslichen Polymerisats A) durch die Polymerisation der Monomerbestandteile a1) und gegebenenfalls a2) in Gegenwart mindestens eines polymeren Dispergiermittels D) hergestellt. Im Verlauf des erfindungsgemäßen Verfahrens wird der sich bildenden Polymerdispersion PD) Wasser entzogen, vorzugsweise durch Verdampfen oder durch Destillation, beispielsweise bei Normaldruck oder bei angelegtem Vakuum. Es resultiert die Polymerdispersion PD'). Danach wird vorzugsweise in einer zweiten Stufe eine weitere Menge an polymerem Dispergiermittel D) in wäßriger Lösung hinzugefügt, um zur Polymerdispersion PD") zu kommen.
Nach Beendigung der zweiten Stufe kann der solchermaßen gebildeten Polymerdispersion PD'') nochmals Wasser entzogen und nochmals ein Anteil der wäßrigen Lösung des polymeren Dispergiermittels D) hinzugegeben werden, um zu noch höheren Wirkstoffgehalten zu kommen. Mit dem erfindungsgemäßen Verfahren lassen sich die
Wirkstoffgehalte der Polymerdispersionen PD), die sich aus den Gehalten aus wasserlöslichem Polymerisat A) und Dispergiermittel D) zusammensetzen, deutlich steigern, ohne die Viskosität der Polymerdispersionen PD') bzw. PD") so hoch steigen zu lassen, daß die Handhabung solchermaßen hergestellter Polymerdispersionen durch zu hohe
Viskositätswerte und daraus resultierender Instabilität bei Scherbelastung vergleichsweise erschwert würde.
In bevorzugten Ausführungsformen der Erfindung weist mindestens eines der wasserlöslichen Monomeren al) mindestens eine ionische Gruppe auf. Das amphiphile Monomere a2) ist bevorzugt eine Verbindung der Formel II: 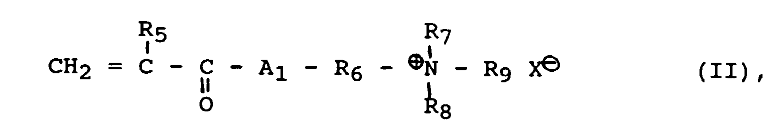 wobei
- A₁: für O, NH, NR₄ mit R₄ für Alkyl mit 1 bis 4 Kohlenstoffatomen,
- R₅: für Wasserstoff oder Methyl
- R₆: für Alkylen mit 1 bis 6 Kohlenstoffatomen,
- R₇ und R₈: unabhängig voneinander für Alkyl mit 1 bis 6 Kohlenstoffatomen
- R₉: für Alkyl mit 8 bis 32 Kohlenstoffatomen
sowie
- X: für Halogen, Pseudohalogen, SO₄CH₃, Acetat
stehen können; hierbei steht Pseudohalogen für -CN-, -OCN- und -SCN-Gruppen,
oder eine Verbindung der Formel III: 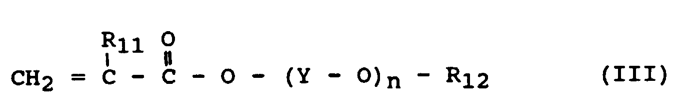 wobei
- R₁₁: für Wasserstoff oder Methyl
- R₁₂: für Wasserstoff, Alkyl, Aryl und/oder Aralkyl mit 8 bis 32 Kohlenstoffatomen
- Y: für Alkylen mit 2 bis 6 Kohlenstoffatomen und
- n: für eine ganze Zahl zwischen 1 und 50
stehen können.

### Durchführung der Erfindung

### Die Monomeren a1)

Als Monomere a1) können beispielsweise Salze der Acryl-, und/oder Methacrylsäure der allgemeinen Formel IV eingesetzt werden: 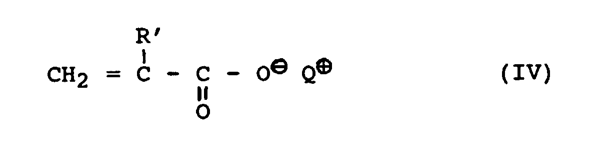 wobei
- R': für Wasserstoff oder Methyl und
- Q^{⊕}: für Alkalimetallionen, wie beispielsweise Na^{⊕} oder K^{⊕}, Ammoniumionen wie beispielsweise NH₄^{⊕}, ^{⊕}NR"₂H₂, ^{⊕} NR"₃H oder ^{⊕}YR"₄ mit R" = Alkyl mit 1 bis 6 Kohlenstoffatomen oder weitere einwertig, positiv geladene Ionen
stehen können.

Zu den Monomeren al) der Formel IV gehören beispielsweise Natrium(meth)acrylat, Kalium(meth)acrylat oder Ammonium(meth) acrylat.

Desweiteren können beispielsweise die Acryl- und/oder die Methacrylsäure selbst als Monomerkomponente a1), sowie (Meth)acrylamide der Formel V verwendet werden: 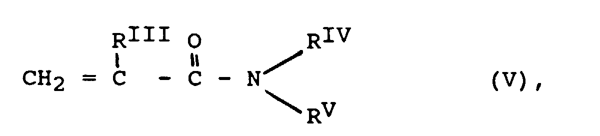 wobei
- R^{III}: für Wasserstoff oder Methyl, sowie
- R^{IV} und R^{V}: unabhängig voneinander für Wasserstoff, für Alkyl mit 1 bis 5 Kohlenstoffatomen
stehen können.

Als Monomere al) der Formel V seien beispielhaft genannt: (Meth)acrylamid, N-Methyl(meth)acrylamid, N,N-Dimethyl(meth)acrylamid, N,N-Diethyl(meth)acrylamid, N-Methyl-N-ethyl(meth)acrylamid sowie N-Hydroxyethyl(meth)acrylamid. Zur Herstellung der (Meth)acrylamide vergleiche beispielsweise Kirk-Othmer, Encyclopedia of Chemical Technology, Vol. 15, Seiten 346 bis 376, 3rd. Ed., Wiley Interscience, 1981.
Weiterhin können als Monomerkomponente a1) Monomere der Formel VI eingesetzt werden: 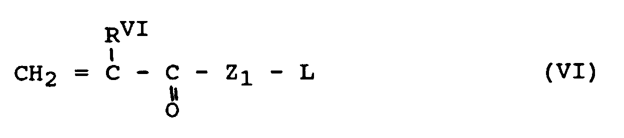 wobei
- R^{VI}: für Wasserstoff oder Methyl
- L: für die Gruppen 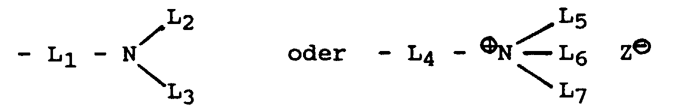
stehen und
- Z₁: für O, NH, oder NR₄,
wobei
- L₁ und L₄: für einen Alkylenrest oder Hydroxyalkylenrest mit 2 bis 6 Kohlenstoffatomen, L₂, L₃, L₅, L₆ und L₇ für einen Alkylrest mit 1 bis 6 Kohlenstoffatomen, sowie Z für Halogen, Acetat, SO₄CH₃^{⊖} stehen können.

Beispielhaft für Monomere al) der Formel VI seien genannt: 2-(N,N-Dimethylamino)ethyl(meth)acrylat, 3-(N,N-Dimethylamino)propyl(meth)acrylat, 4-(N,N-Dimethylamino)butyl-(meth)acrylat, 2-(N,N-Diethylamino)ethyl(meth)acrylat, 2-Hydroxy-3-(N,N-dimethylamino)propyl(meth)acrylat, 2-(N,N,N-Trimethylammonium)ethyl(meth)acrylat-chlorid, 3-(N,N,N-Trimethylammonium)propyl(meth)acrylat-chlorid oder 2-Hydroxy-3-(N,N,N-Trimethylammonium)propyl(meth)acrylat-chlorid bzw. die (Meth)acrylamide der o.g. Verbindungen, wie beispielsweise 2-Dimethylaminoethyl(meth)acrylamid, 3-Dimethylaminopropyl(meth)acrylamid oder 3-Trimethylammoniumpropyl(meth)acrylamid-chlorid. Als Monomerkomponente al) können weiterhin ethylenisch ungesättigte Monomere, die zur Bildung von wasserlöslichen Polymeren befähigt sind, eingesetzt werden, wie beispielsweise Vinylpyridin, N-Vinylpyrrolidon, Styrolsulfonsäure, N-Vinylimidazol oder Diallyldimethylammoniumchlorid. Dabei sind auch Kombinationen verschiedener, unter al) angeführter wasserlöslicher Monomeren möglich. Zur Darstellung der (Meth)acrylammonium-Salze vgl. beispielsweise Kirk-Othmer, Encyclopedia of Chemical Technology, Vol. 15, Seiten 346 bis 376, 3rd. Ed., Wiley Interscience, 1987.

### Die Monomeren a2)

Amphiphile Monomere a2) können beispielsweise monomere Verbindungen der Formeln II oder III sein: 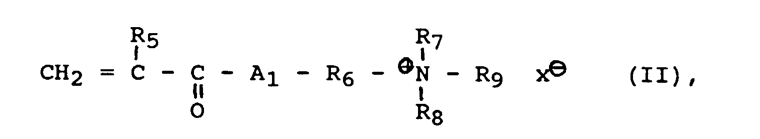 wobei
- A₁: für O, NH, NR₄ mit R₄ für Alkyl mit 1 bis 4 Kohlenstoffatomen,
- R₅: für Wasserstoff oder Methyl,
- R₆: für Alkylen mit 1 bis 6 Kohlenstoffatomen,
- R₇ und R₈: unabhängig voneinander für Alkyl mit 1 bis 6 Kohlenstoffatomen,
- R₉: für Alkyl, Aryl und/oder Aralkyl mit 8 bis 32 Kohlenstoffatomen und
- X: für Halogen, Pseudohalogen, SO₄CH₃ oder Acetat
stehen können bzw. 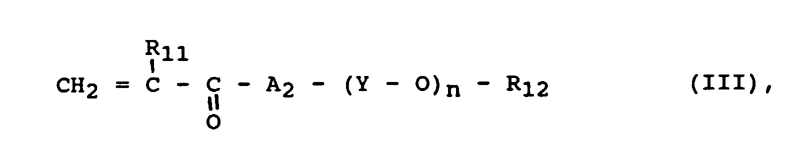 wobei
- A₂: für O, NH, NR₁₃ mit R₁₃ für Alkyl mit 1 bis 4 Kohlenstoffatomen,
- R₁₁: für Wasserstoff oder Methyl,
- R₁₂: für Wasserstoff, Alkyl, Aryl und/oder Aralkyl mit 8 bis 32 Kohlenstoffatomen,
- Y: für Alkylen mit 2 bis 6 Kohlenstoffatomen
sowie
- n: für eine ganze Zahl zwischen 1 und 50
stehen können.

Zur Herstellung der amphiphilen Monomeren der Formel II vergleiche beispielsweise Kirk-Othmer, Encyclopedia of Chemical Technology, Vol. 1, 3rd. Ed., Seiten 330 bis 354 (1978) und Vol. 15, Seiten 346 bis 376 (1981), Wiley Interscience.

Beispielhaft für Monomere der Formel III seien genannt: 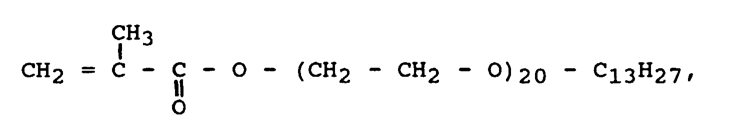 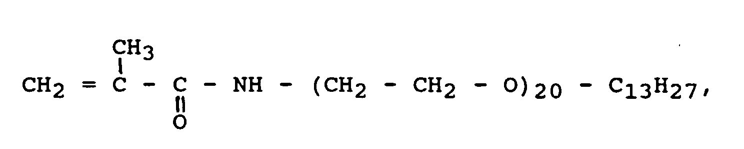 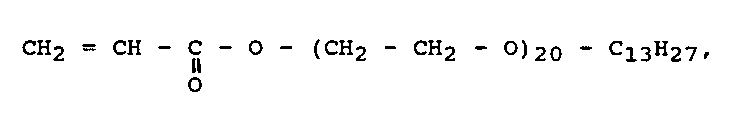 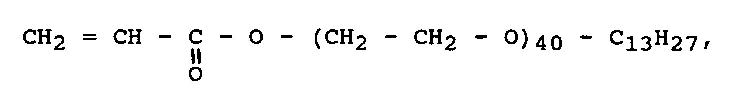 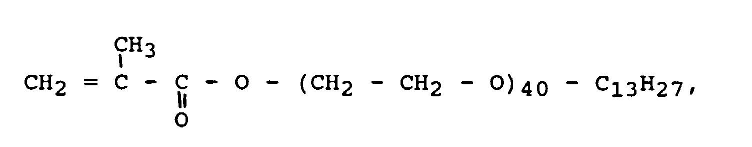 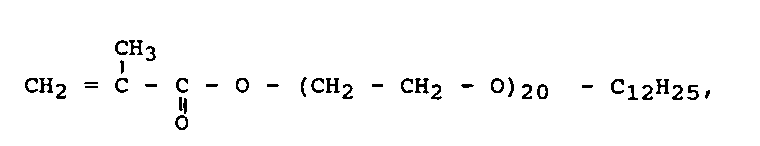 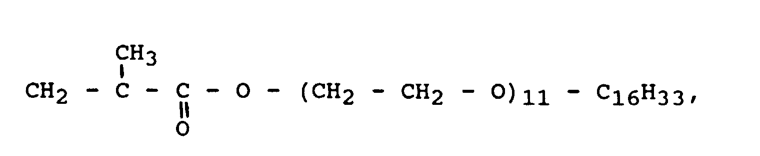 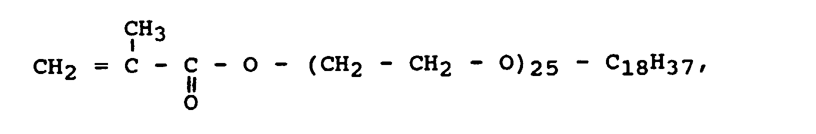 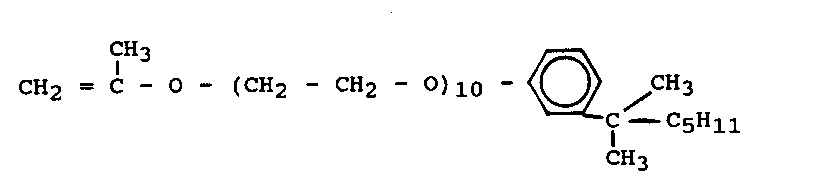 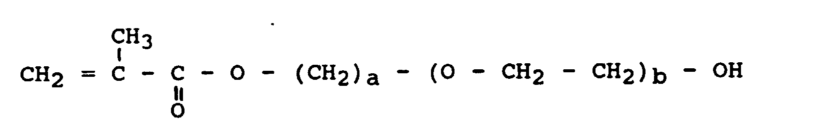 mit a = 6 bis 15 und b = 1 bis 50

Desweiteren können als amphiphile Monomere der Formel II beispielsweise eingesetzt werden: 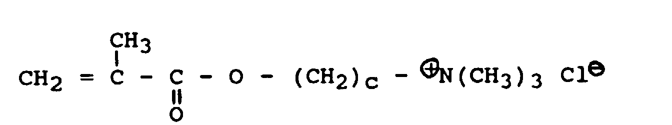 mit c = 6 bis 18 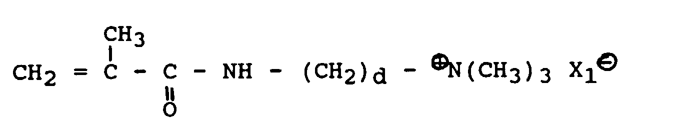 mit
- X₁^{⊖} =: Cl^{⊖} oder SO₄CH₃^{⊖} und
- d =: 6 bis 18
oder 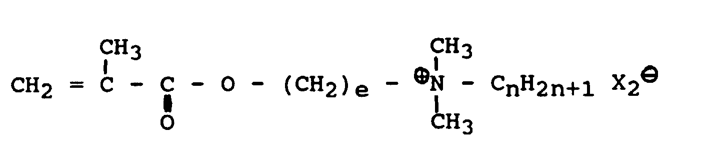 mit
- e =: 2 bis 6 und n = 6 bis 18
- X₂^{⊖} =: Cl^{⊖} oder SO₄CH₃^{⊖}

Dabei sind auch die Kombinationen verschiedener, unter a2) angeführter, amphiphiler Monomeren möglich.

### Das polymere Dispergiermittel D

Das polymere Dispergiermittel unterscheidet sich signifikant in der chemischen Zusammensetzung und im mittleren Molekulargewicht M_{w} (Gewichtsmittel) von dem wasserlöslichen Polymerisat, bestehend aus dem Monomerengemisch a1) und gegebenenfalls a2), wobei das polymere Dispergiermittel D) mit dem wasserlöslichen Polymerisat unverträglich ist. Die mittleren Molekulargewichte M_{w} der polymeren Dispergiermittel liegen im Bereich zwischen 10³ bis 5 x 10⁵ Dalton, vorzugsweise zwischen 10⁴ bis 4 x 10⁵ Dalton (zur Bestimmung von M_{w} vgl. H.F. Mark et al., Encyclopedia of Polymer Science and Technology, Vol. 10, Seiten 1 bis 19, J. Wiley, 1987).
Die polymeren Dispergiermittel D) enthalten wenigstens eine funktionelle Gruppe ausgewählt aus Ether-, Hydroxyl-, Carboxyl-, Sulfon-, Sulfatester-, Amino-, Amido-, Imido-, tert.-Amino- und/oder quaternären Ammoniumgruppen. Beispielhaft für die Polymerisate D) seien genannt: Cellulosederivate, Polyethylenglykol, Polypropylenglykol, Copolymerisate aus Ethylenglykol und Proplyenglykol, Polyvinylacetat, Polyvinylalkohol, Stärke und Stärkederivate, Dextran, Polyvinylpyrrolidon, Polyvinylpyridin, Polyethylenimin, Polyvinylimidazol, Polyvinylsuccinimid, Polyvinyl-2-methylsuccinimid, Polyviny1-1,3-oxazolidon-2, Polyvinyl-2-methylimidazolin, sowie Copolymerisate, die neben Kombinationen aus monomeren Bausteinen o.g. Polymerisate beispielsweise folgende Monomereinheiten enthalten können: Maleinsäure, Maleinsäureanhydrid, Fumarsäure, Itakonsäure, Itakonsäureanhydrid, (Meth)acrylsäure, Salze der (Meth)acrylsäure oder (Meth)acrylamid-Verbindungen. Bevorzugt werden als polymere Dispergiermittel D) Polyalkylenether wie beispielsweise Polyethylenglykol, Polypropylenglykol oder Polybutylen-1,4-ether eingesetzt. Zur Herstellung von Polyalkylenethern vergleiche beispielsweise Kirk-Othmer, Encyclopedia of Chemical Technology, 3rd. Ed., Vol. 18, Seiten 616 bis 670, 1982, Wiley Interscience.

Besonders bevorzugt werden als polymere Dispergiermittel D) Polyelektrolyte verwendet, wie beispielsweise Polymerisate, enthaltend Monomerbausteine wie z.B. Salze der (Meth)acrylsäure als anionische Monomerbausteine oder mit Methylchlorid quaternierte Derivate von N,N-Dimethylaminoethyl(meth)acrylat, N,N-Dimethylaminopropyl(meth)acrylat oder N,N-Dimethylaminohydroxypropyl(meth)acrylat oder N,N-Dimethylaminopropyl(meth)acrylamid. Ganz besonders bevorzugt wird Poly(diallyldimethylammoniumchlorid) (Poly-DADMAC) mit einem mittleren Molekulargewicht M_{w} zwischen 5 x 10⁴ und 4 x 10⁵ Dalton als polymeres Dispergiermittel eingesetzt. Zur Herstellung von Polyelektrolyten vergleiche beispielsweise Kirk-Othmer, Encyclopedia of Chemical Technology, 3rd. Ed. Vol. 18, Seiten 495 bis 530, 1982, Wiley Interscience.

Desweiteren können niedermolekulare Emulgatoren mit einem Molekulargewicht < 10³ Dalton in Mengen von 0 bis 5 Gew.-% bezogen auf die Polymerdispersion eingesetzt werden.

### Das Herstellungsverfahren

### 1. Stufe:

Herstellung der wäßrigen Polymerdispersion PD') enthaltend Polymerisat A) und polymeres Dispergiermittel D) durch Abziehen von Wasser während der Polymerisation und gegebenenfalls weiterem Zusatz von polymerem Dispergiermittel D):
Die Menge des Monomerengemischs a1) und gegebenenfalls a2), die das Polymerisat A) aufbauen, bezogen auf 100 Gew.-Teile Wasser als Reaktionsmedium, liegt im allgemeinen zwischen 5 und 80 Gew.-Teilen, vorzugsweise zwischen 10 und 50 Gew.-Teilen. Werden die Monomeren a1) und gegebenenfalls a2) als wäßrige Lösung eingesetzt, so wird der Wasseranteil dem Reaktionsmedium zugeschlagen. Die Menge des polymeren Dispergiermittels D) bezogen auf 100 Gew. -Teile Wasser als Reaktionsmedium liegt im allgemeinen zwischen 1 und 50 Gew.-Teilen, bevorzugt zwischen 2 und 40 Gew. Gew.-Teilen und besonders bevorzugt zwischen 5 und 30 Gew.-Teilen.
Zum Starten der Polymerisation werden beispielsweise radikalische Initiatoren (= Polymerisationsstarter) oder hochenergetische Strahlung, wie beispielsweise UV-Licht, verwendet. Bevorzugt werden als radikalische Initiatoren beispielsweise 2,2'-Azobisisobutyronitril, 2,2'-Azobis(2-aminopropan)dihydrochlorid(bevorzugt in Dimethylformamid gelöst), vorzugsweise 2,2'-Azobis[2-(2-imidazolin-2-yl)-propan], Kaliumpersulfat, Ammoniumpersulfat, Wasserstoffperoxid, gegebenenfalls in Kombination mit einem Reduktionsmittel, wie beispielsweise einem Amin oder Natriumsulfid, eingesetzt. Der Anteil an Initiator, bezogen auf das Monomerengemisch a1) und ggfs. a2) liegt gewöhnlich zwischen 10⁻³ und 5 Gew.-%, vorzugsweise zwischen 10⁻² und 1 Gew.-%, wobei der Initiator zu Beginn der Polymerisation vollständig oder teilweise mit nachfolgender Dosierung über den gesamten Polymerisationsverlauf zugegeben werden kann. Ebenso kann das Monomerengemisch aus a1) und ggfs. a2) vollständig am Anfang der Polymerisation oder teilweise als Zulauf über den gesamten Polymerisationsverlauf hinweg zugegeben werden. Die Polymerisationstemperatur beträgt im allgemeinen zwischen 0 und 100 Grad C, bevorzugt zwischen 30 und 60 Grad C. Vorzugsweise wird unter Inertgas-Atmosphäre, beispielsweise unter Stickstoff-Atmosphäre, polymerisiert. Der Endumsatz der Polymerisation liegt über 98 Gew.-% des eingesetzten Monomerengemisches a1) und ggfs. a2), wofür im allgemeinen zwischen 1 und 8 Stunden Polymerisationsdauer erforderlich sind.

Während der Polymerisation wird der Wassergehalt der entstehenden Polymerdispersion PD) vorzugsweise durch Verdampfen des Wassers reduziert. Dies kann beispielsweise durch Abdestillieren des Wassers erfolgen, was vorzugsweise bei Unterdruck bzw. im Vakuum durchgeführt wird. Die hierbei verwendeten Destillationsapparate sind bekannt, wie beispielsweise Destillationskolonnen (vgl. hierzu z.B. Kirk-Othmer, Encyclopedia of Chemical Technology, 3rd. Ed. Vol. 7, Seiten 849 bis 891, J. Wiley, New York, 1979). Weitere Verdampfungsaggegate sind beispielsweise Konvektionsverdampfer oder Dünnschichtverdampfer (vgl. hierzu z.B. Kirk-Othmer, Encyclopedia of Chemical Technology, 3rd. Ed., Vol. 9, Seiten 472 bis 493, J. Wiley, New York, 1980). Auch Methoden wie Membrandiffusion oder das Binden von Wasser mit organischen oder anorganischen Reagenzien sind möglich. Der Wassergehalt der solchermaßen hergestellten Polymerdispersion PD')kann in dem Maße reduziert werden, solange die Viskosität der resultierenden Polymerdispersionen eine technologisch vernünftige Handhabung zuläßt und solange es die Dispersionsstabilität zuläßt.

Vorzugsweise wird mit dem Beginn des Abziehens des Wassers solange gewartet, bis die wäßrige Lösung der Monomeren, enthaltend einen Teil des polymeren Dispergiermittels D), die Reaktionstemperatur erreicht, bis über dem Reaktionsansatz eine Inertgasatmosphäre herrscht und bis der Initiator zugegeben worden ist. Besonders bevorzugt wird nach der Zugabe des Initiators noch eine bestimmte Zeit, im allgemeinen zwischen 10 min und 1 Stunde, mit dem Beginn des Abziehens des Wassers gewartet.

### 2. Stufe:

Zugabe des polymeren Dispergiermittels D) in wäßriger Lösung zu der in Stufe 1 gebildeten Polymerdispersion PD') zur Herstellung der Polymerdispersion PD''):
Die Zugabe des polymeren Dispergiermittels D in wäßriger Lösung zu der in der 1. Stufe des erfindungsgemäßen Verfahrens gebildeten Polymerdispersion PD') mit reduziertem Wassergehalt erfolgt mit statischen oder dynamischen Mischaggregaten.

Während erstere durch Erzeugung von Turbulenz wirken, die in dem Flüssigkeitsgemisch beim Durchströmen der Mischer entsteht, wird die Turbulenz bei den dynamischen Mischern aktiv erzeugt (vgl. hierzu beispielsweise Römpps Chemie-Lexikon, 9. Aufl., Seite 2805, Georg Thieme, Stuttgart, New York, 1991). Bevorzugt werden Rührer eingesetzt, wie beispielsweise Propeller-, Schrägblatt-, Scheiben-, Impeller-, Kreuzbalken-, Gitter-, Anker-, Schraubenspindel-oder Wendelrührer, wobei ganz besonders bevorzugt Rührer verwendet werden, die beim Rührvorgang ein geringes Schergefälle erzeugen (vgl. hierzu z.B. Römpps Chemielexikon, 9. Aufl., Seiten 3939 bis 3940, Georg Thieme, Stuttgart, New York, 1992). Beim Mischvorgang wird vorzugsweise die wäßrige Dispersion der Polymerisate PD') vorgelegt und danach das polymere Dispergiermittel D), das vorzugsweise in wäßriger Lösung eingesetzt wird, unter Rühren schrittweise zugefügt. Dabei wird die Viskosität des Gemisches ständig kontrolliert. In einer besonders bevorzugten Ausführungsform der Erfindung wird die wäßrige Dispersion des Polymerisats auf 30 bis 90 Grad C, vorzugsweise auf 40 bis 70 Grad C erwärmt, um die Viskosität während des Mischvorgangs möglichst niedrig zu halten. Es resultieren Polymerdispersionen PD") mit sehr hohen Wirkstoffgehalten bei vergleichsweise sehr niedriger Viskosität. So kann durch das erfindungsgemäße Verfahren der Wirkstoffgehalt einer Polymerdispersion PD"), der die Summe der Gehalte an Polymerisat A) und an polymerem Dispergiermittel D) darstellt, beispielsweise bei etwa gleichbleibender Viskosität bezogen auf die Viskosität der Polymerdispersionen PD) verdoppelt werden. Im allgemeinen sind Polymerdispersionen PD") mit einem Wirkstoffgehalt von bis zu 50 Gew.-% oder leicht darüber möglich.

In einer weiteren vorteilhaften Ausgestaltung der Erfindung kann der Polymerdispersion PD") in der oben beschriebenen Form nochmals Wasser entzogen werden und anschließend die 2. Stufe des erfindungsgemäßen Verfahrens wiederholt werden. Hierbei muß, wie auch bei der Zugabe der wäßrigen Lösung des Dispergiermittels D) in Stufe 2, keine Inertgasatmosphäre über der Dispersion herrschen.

### Vorteilhafte Wirkungen der Erfindung

Die nach dem erfindungsgemäßen Verfahren hergestellten Polymerdispersionen PD') bzw. PD") zeichnen sich, gemessen an der Wirkstoffkonzentration, wobei der Wirkstoff aus der Kombination von Polymerisat A) und von Dispergiermittel D) besteht, und gemessen am mittleren Molekulargewicht des Polymerisats A) durch eine überraschend niedrige Viskosität aus. Beim Verdünnen der wäßrigen Polymerdispersion PD'bzw. PD") steigt die aktuelle Viskosität auf ein sehr hohes Maximum, wobei das System klar wird. Dabei sind die Viskositäten der wäßrigen Polymerisatlösung bei 1 Gew.-% Polymerisatgehalt auf einem hohen Niveau, wobei das bevorzugt eingesetzte Dispergiermittel D) Poly-DADMAC gleichzeitig als Wirkstoff, d.h. als Störstoffänger bei Kreislaufwasser und zur Unterstützung der Flockenbildung, beispielsweise bei der Klärschlammkoagulation, fungiert. Ein weiteres vorteilhaftes Merkmal der erfindungsgemäßen wäßrigen Polymerdispersion PD') bzw. PD") ist die hohe Scher- und Standstabilität. So bleibt die hohe Viskosität einer wäßrigen Lösung mit 1 Gew-% Polymerisatgehalt auch nach längerem Rühren weitgehend konstant.

Die Abwesenheit von organischen Lösungsmitteln gewährleistet eine sichere Handhabung (beispielsweise: keine Entflammbarkeit) und eine ökologisch unbedenkliche Verwendung der erfindungsgemäßen Polymerdispersionen PD') bzw. PD") beispielsweise als Verdickungsmittel, Flockungshilfsmittel für elektrisch geladene Schwebeteilchen, als Retentionsmittel für die Papierherstellung und/oder als Bodenverbesserungsmittel. In isolierter oder wasserarmer Form kann das erfindungsgemäße Polymerisat als Entwässerungsmittel, beispielsweise im Hygienebereich verwendet werden.

Die folgenden Beispiele sollen die Erfindung erläutern. Die physikalischen Daten wurden anhand folgender Normen bestimmt:
- Dynamische Viskosität η (Pa·s) nach DIN 53 018/53 019
- Molekulargewicht M_{w} per Gelpermeationschromatographie (vgl. z.B. H.F. Mark et al.: s.o.) mit Standard Poly(2-Trimethylammoniumethylacrylatchlorid)
- Stammbergewert STB II (S): Bestimmung des zeitlichen Verlaufs der Kaolinsedimentation bei Flockungsmittel-haltigen Lösungen nach dem Flockungsvorgang:
   Pro Liter Leitungswasser (20 Grad DH) werden 20 g Kaolin suspendiert und unter Rühren homogen gehalten.
   Danach werden 250 ml Kaolinsuspension in einen 250 ml-Meßzylinder gefüllt und unter Rühren homogen gehalten.
   Zur Dosierung von 1 ml 0,1 %iger wäßriger Lösung der Polymerdispersion PD") (Wirkstoffgehalt) wird die Rührung unterbrochen.
   Anschließend wird noch 15 sec. gerührt und hiernach die Rührung abgestellt. Danach wird die Zeit für das Absinken des Sedimentationsspiegels um 4 cm im Meßzylinder genommen, welche dem Stammbergewert STB II entspricht.

### BEISPIELE

### Beispiel 1:

Herstellung und Eigenschaften einer nach dem zweistufigen Verfahren hergestellten Polymerdispersion PD''):

Die Mischung aus 342,5 g einer 40 %igen wäßrigen Polydiallyldimethylammoniumchlorid-(Poly-DADMAC)-Lösung, 100,0 g Acrylamid, 125,0 g einer 80 %igen wäßrigen 2-Trimethylammoniumethylacrylatchlorid-Lösung und 432,5 g Wasser wird in einem Reaktionsgefäß mit einer Stickstoff-Inertgasatmosphäre versehen und unter Rühren auf 62 Grad C erwärmt.
Anschließend werden 0,02 g 2,2'-Azobis[2-imidazolin-2-yl)-propan] (AIP) gelöst in 0,18 g Wasser hinzugegeben und ein Vakuum von 250 mbar zum Abziehen des Wassers angelegt. Nach 1,5 Stunden Reaktion unter Rühren wird die Temperatur des Reaktionsgemischs auf 77 Grad C erhöht und weitere 0,2 g AIP gelöst in 0,2 g Wasser unter Beibehaltung des Vakuums hinzugegeben. Nach einer weiteren Stunde Reaktionsdauer ist die Reaktion beendet. Während der gesamten Reaktionsdauer von 2,5 Stunden werden bei einem Vakuum von 250 mbar 222 g Wasser aus der Reaktionsmischung entfernt.
In der zweiten Stufe werden daraufhin der solchermaßen gebildeten Polymerdispersion PD') weitere 222 g einer 40 %igen wäßrigen Poly-DADMAC-Lösung hinzugefügt.
Die nach dem zweistufigen Verfahren resultierende Polymerdispersion PD") weist folgende Eigenschaften auf:
Dynamische Viskosität : η₁ = 63.000 mPa·s
Dynamische Viskosität einer 1 %igen wäßrigen Lösung des Polymerisats in Wasser (Bezug ist Trockengehalt des Polymerisats A)): η₂ = 1.330 mPa·s.
Flockungswert: STB II (S) = 11,3 s
Trockengehalt der Polymerdispersion PD'') : 42,6 % Molekulargewicht des in der Polymerdispersion PD") befindlichen Polymerisats A): M_{w} > 10⁶ Dalton.

### Beispiel 2:

Herstellung und Eigenschaften einer nach dem einstufigen Verfahren hergestellten Polymerdispersion PD'):

Die Mischung aus 275,0 g einer 40 %igen wäßrigen Poly-DADMAC-Lösung, 75,0 g Acrylamid, 93,8 g einer 80 %igen wäßrigen 2-Trimethylammoniumethylacrylatchlorid-Lösung und 556,2 g Wasser wird in einem Reaktionsgefäß mit einer Stickstoff-Inertgasatmosphäre versehen und unter Rühren auf 55 Grad C erwärmt.
Anschließend werden 0,015 g AIP gelöst in 0,18 g Wasser hinzugefügt und nach 25 Minuten Reaktionsdauer unter Rühren ein Vakuum von 150 mbar zum Abziehen des Wassers angelegt. Nach 1,5 Stunden Reaktionsdauer wird die Temperatur auf 65 Grad C erhöht und weitere 0,15 g AIP gelöst in 1,35 g Wasser unter Beibehaltung des Vakuums hinzugefügt. Nach weiteren 15 min Reaktionszeit ist die Reaktion beendet. Während der gesamten Reaktionsdauer von 1,75 Stunden werden bei einem Vakuum von 150 mbar 267 g Wasser aus der Reaktionsmischung entfernt.

Die nach dem einstufigen Verfahren resultierenden Polymerdispersion PD') weist folgende Eigenschaften auf:

Dynamische Viskosität: η₁ = 132.000 mPa·s
Dynamische Viskosität einer 1 %igen wäßrigen Lösung des Polymerisats in Wasser (Bezug ist Trockengehalt des Polymerisats A)): η₂ = 2.200 mPa·s.
Flockungswert: STB II (S) = 6,8 s
Molekulargewicht des in der Polymerdispersion PD') befindlichen Polymerisats A) = M_{w} > 10⁶ Dalton.

## Patentansprüche

1. Verfahren zur Herstellung niedrigviskoser, wasserlöslicher Polymerdispersionen PD') auf wäßriger Basis mit hohen Wirkstoffkonzentrationen, enthaltend ein Polymerisat A) aufgebaut aus den monomeren Bestandteilen:
a1) 80 bis 100 Gew.-% mindestens eines wasserlöslichen Monomeren sowie gegebenenfalls
a2) 0 bis 20 Gew-% mindestens eines amphiphilen Monomeren,
wobei sich die Monomerkomponenten a1) und a2) jeweils zu 100 Gew.-% ergänzen und die Polymerisate A) ein mittleres Molekulargewicht von mindestens 5 x 10⁵ Dalton aufweisen, sowie mindestens ein polymeres Dispergiermittel D),
dadurch gekennzeichnet,
daß während der Herstellung des Polymerisats A) aus den Monomerbestandteilen a1) und a2) in Gegenwart des polymeren Dispergiermittels D) Wasser abgezogen wird.

2. Verfahren zur Herstellung niedrigviskoser, wasserlöslicher Polymerdispersionen PD") mit hoher Wirkstoffkonzentration, dadurch gekennzeichnet, daß sich dem Verfahrensschritt zur Herstellung von Polymerdispersionen PD') gemäß Anspruch 1 ein zweiter Verfahrensschritt anschließt, in dem das polymere Dispergiermittel D) in wäßriger Lösung zur Polymerdisperion PD') zugegeben wird.

3. Verfahren zur Herstellung niedrigviskoser, wasserlöslicher Polymerdispersionen mit hoher Wirkstoffkonzentration, dadurch gekennzeichnet, daß sich den Verfahrensschritten gemäß Anspruch 1 zur Herstellung von Polymerdispersionen PD') bzw. den Verfahrensschritten gemäß Anspruch 2 zur Herstellung von Polymerdispersionen PD") in weiteren Verfahrensschritten zunächst das Abziehen von Wasser und danach die Zugabe des polymeren Dispergiermittel D) in wäßriger Lösung anschließen.

4. Verfahren gemäß den Ansprüchen 1 bis 3, dadurch gekennzeichnet, daß das polymere Dispergiermittel D) ein Polyelektrolyt mit einem Molekulargewicht M_{w} von weniger als 5 x 10⁵ Dalton ist.

5. Verfahren gemäß den Ansprüchen 1 bis 3, dadurch gekennzeichnet, dass das polymere Dispergiermittel D) ein Polyalkylenether ist, wobei die Alkylengruppen 2 bis 4 Kohlenstoffatome aufweisen können.

6. Verfahren gemäß den Ansprüchen 1 bis 5, dadurch gekennzeichnet, daß mindestens eines der wasserlöslichen Monomeren a1) mindestens eine ionische Gruppe aufweist.

## Claims

1. A process for the production of low-viscosity, water-soluble polymer dispersions PD') on an aqueous basis, which have high concentrations of active ingredients and include a polymer A) constituted of the following monomeric components:
a1) from 80 to 100 wt.-% of at least one water-soluble monomer, and optionally
a2) from 0 to 20 wt.-% of at least one amphiphilic monomer,
wherein the monomer components a1) and a2) are balanced such as to make 100 wt.-% and the polymers A) have an average molecular weight of at least 5 x 10⁵ daltons, and at least one polymeric dispersant D), characterized in that water is removed during the production of said polymerizate A) from said monomer components a1) and a2) in the presence of said polymeric dispersant D).

2. A process for the production of low-viscosity, water-soluble polymer dispersions PD") having high concentrations of active ingredients, characterized in that the processing step for the production of the polymer dispersions PD') according to claim 1 is followed by a second processing step wherein the polymeric dispersant D) in aqueous solution is added to the polymer dispersion PD').

3. A process for the production of low-viscosity, water-soluble polymer dispersions having high concentrations of active ingredients, characterized in that the processing steps according to claim 1 for the production of the polymer dispersions PD') and the processing steps according to claim 2 for the production of the polymer dispersions PD"), respectively, are followed by initial removal of water and subsequently, addition of the polymeric dispersant D) in aqueous solution in further processing steps.

4. The process according to claims 1 through 3, characterized in that the polymeric dispersant D) is a polyelectrolyte having a molecular weight Mw of less than 5 × 10⁵ daltons.

5. The process according to claims 1 through 3, characterized in that the polymeric dispersant D) is a polyalkylene ether wherein the alkylene groups may have from 2 to 4 carbon atoms.

6. The process according to claims 1 through 5, characterized in that at least one of said water-soluble monomers al) has at least one ionic group.

## Revendications

1. Procédé de préparation de dispersions de polymères solubles dans l'eau et faiblement visqueuses PD') à base aqueuse à concentrations élevées en substances actives, contenant un polymérisat A) constitué des composants monomères suivants:
a1) 80 à 100% en poids d'au moins un monomère soluble dans l'eau ainsi qu'éventuellement,
a2) 0 à 20% en poids d'au moins un monomère amphiphile, où les composants monomères a1) et a2) font ensemble 100% en poids et les polymérisats A) présentent un poids moléculaire moyen d'au moins 5 x 10⁵ Dalton, ainsi qu'au moins un agent dispersant polymère D), caractérisé en ce que de l'eau est éliminée pendant la préparation du polymérisat A) formé des composants monomères a1) et a2) en présence de l'agent dispersant polymère D).

2. Procédé de préparation de dispersions de polymères solubles dans l'eau et faiblement visqueuses PD") à concentrations élevées en substances actives, caractérisé en ce que l'étape de procédé de préparation des dispersions de polymères PD') selon la revendication 1 est suivie d'une deuxième étape de préparation pendant laquelle l'agent dispersant polymère D) est ajouté à la dispersion de polymère PD') sous forme d'une solution aqueuse.

3. Procédé de préparation de dispersions de polymères solubles dans l'eau et faiblement visqueuses à concentrations élevées en substances actives, caractérisé en ce que les étapes du procédé selon la revendication 1 pour la préparation de dispersion de polymères PD') ainsi que les étapes de procédé selon la revendication 2 pour la préparation des dispersions de polymères PD") sont suivies d'autres étapes de procédé consistant tout d'abord à éliminer de l'eau et à ajouter ensuite l'agent dispersant polymère D) sous forme d'une solution aqueuse.

4. Procédé selon les revendications 1 à 3, caractérisé en ce que l'agent dispersant polymère D) est un polyélectrolyte avec un poids moléculaire Mw d'au moins 5 x 10⁵ Dalton.

5. Procédé selon les revendications 1 à 3, caractérisé en ce que l'agent dispersant polymère D) est un éther polyalkylénique où les groupes alkylène peuvent comporter de 2 à 4 atomes de carbone.

6. Procédé selon les revendications 1 à 5, caractérisé en ce qu'au moins l'un des monomères soluble dans l'eau a1) présente au moins un groupe ionique.
